# EUROPEAN PATENT SPECIFICATION

(11) **EP 2 411 179 B1**
(45) Date of publication and mention of the grant of the patent: **31.10.2012**
(21) Application number: 10716876.7
(22) Date of filing: 24.03.2010
(51) Int. Cl.: B23Q 3/06

(54) **CLAMPING DEVICE, PARTICULARLY FOR OPERATING CENTRES**
KLEMMVORRICHTUNG, INSBESONDERE FÜR BEARBEITUNGSZENTREN
DISPOSITIF DE FIXATION, EN PARTICULIER POUR CENTRES D'USINAGE

(30) Priority: 27.03.2009 IT MI20090490
(43) Date of publication of application: 01.02.2012
(73) Proprietor: FIMCIM S.P.A., 20121 Milano (MI) (IT)
(72) Inventor: AGAZZONI, Marco, I-20121 Milano (IT); FONTANA, Uberto, I-20121 Milano (IT); GIUPPONI, Andrea, I-20121 Milano (IT)
(74) Representative: Ponzellini, Gianmarco
(86) International application number: PCT/IB2010/000658
(87) International publication number: WO 2010/109305

(56) References cited:
- DE-A1- 10 361 619
- US-A- 3 899 162
- US-A- 4 557 371
- MOSIG D: "FLEXIBLE MEHRFACHSPANNUNG MIT HOHER RENTABILITAET. ÖIMPROVED PROFITABILITY WITH FLEXIBLE MULTIPLE CHUCKING" WERKSTATT UND BETRIEB, CARL HANSER VERLAG, MUNCHEN, DE, vol. 127, no. 7/08, 1 July 1994 (1994-07-01), XP000460947 ISSN: 0043-2792

## Description

The invention relates to a clamping device, particularly suitable for operating centres, for example of a horizontal type.

In particular, the apparatus of the invention consists of a bearing structure made of aluminium alloy in a turret form, on which eight self-centring clamps are connected which are pneumatically/hydraulically activated. The apparatus can be fixed on a work plane of any work machine, enabling loading/unloading of an object to or from the clamps and therefore, once the loading/unloading operation has been completed, bringing the work plane into the operating zone where the work operations are performed on the loaded pieces, for example planing.

As is known, clamping devices at present used in horizontal operating centres are generally provided with special hydraulically- or pneumatically-acting clamps and are constituted by known rotary work planes typical of the most widely-used transfer machines.

In general these apparatus, which exhibit a plurality of the clamps, command, via a same pressurised and unloading line, a contemporary opening/closure of all the clamps.

The impossibility of commanding the single clamps independently of one another means that the operating machine cannot have an unmanned automatic loading system, as for loading work-pieces, which are apt to be unstable, if all the clamps move contemporaneously it is necessary to use dedicated supporting tools for each article; this makes the operating substantially impossible in the absence of a constant and continuous control of the operations by an operator. To resolve this drawback expensive special versions of rotary work-planes have been realised for machines with tools having four or more axes, generally provided with complex distribution systems which can bring many oil-dynamic lines to the fastening tools, thus independently commanding each of the clamps. It is however clear that the above solutions lead to considerable manufacturing costs, as well as management and maintenance outlays.

A plurality of distribution systems are required and the apparatus exhibits a plurality of oil-dynamic lines which can interfere with the movement of the rotary plane and even with the work operations performed by the operating centre. Documents DE 10361619 and US 4557371 describes clamping apparatus in which the work-bearing device is provided with a hydraulic system which supplies, in cascade, a further pneumatic system that is activatable independently by means of valves on the single clamps.

The systems of the above-cited documents are however complex and poorly flexible and lead to the use of hybrid circuits, not always easily controllable and apt to further complicate the architecture of the device.

In this situation the technical objective of the present invention is to substantially obviate all of the above-mentioned drawbacks.

A first aim of the invention is to make available a clamping tool which enables, via a single oil pressure line and a single discharge line, an independent command of a plurality of clamps such as to enable easy and more simple loading/unloading operations of the single articles to and from the clamping turret.

A further aim of the invention is to optimise the dimensions of the device, enabling better exploiting of the operating run of the horizontal axis of the clamps and also complete exploitation of the run of the vertical axis of the clamps, balancing the two needs.

In other words, the aim at the base of the present invention is to combine the flexibility, operating power, excellent structural qualities, fine-finishing and precision of the operations performed by horizontal operating centres with the speed of transfer machines.

Thus an aim is to exploit the potentialities of a four-axis CNC (for example for performing boring of out-of-axis holes having angles that a mere multiples of thousandths, shallow bevelling and recesses with very varied geometries, bevels with greater precisions, etc.) while improving overall performance.

An auxiliary aim of the invention is to distribute work times by increasing the productivity of the centre to acceptable levels for considerably large batches which, due to tooling times or relative complexity, would not be economical to put into production with transfer machines.

These and other aims besides are substantially attained by a clamping tool, preferable for operating centres, as specified in the appended claims.

Further characteristics and advantage will better emerge from the detailed description that follows of a preferred but not exclusive embodiment of a clamping device for operating centres of the present invention.

The clamping device will be described herein bellow with reference to the accompanying figures of the drawings, given by way of non-limiting example, and in which:
figure 1 is a perspective view of a clamping device of the present invention;
figure 2 is a section of the device of figure 1, along a vertical plane passing through the centre of the apparatus;
figure 3 illustrates a turret support frame used in the clamping apparatus of figure 1;
figure 4 is a view from above of the support frame of figure 3;
figures 5-9 are sections along planes V-V, VI-VI, VII-VII, VIII-VIII, IX-IX of figure 4;
figure 10 illustrates a distributing body used in the apparatus of figure 1;
figure 11 is a literal view of the distributing body of figure 10
figures 12-14 illustrates three section along planes XII-XII, XIII-XIII and XIV-XIV of figure 11;

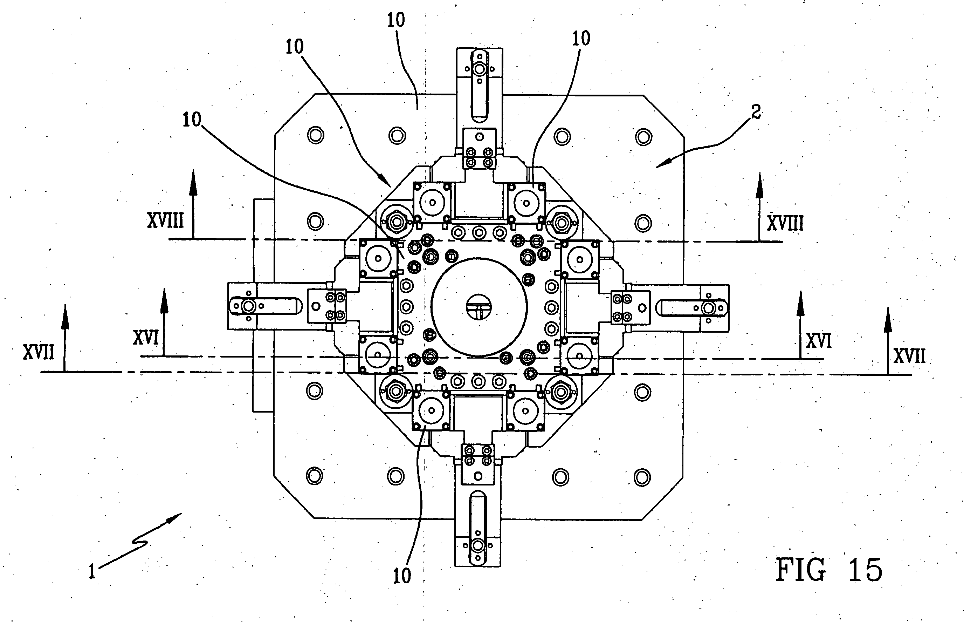

figure 15 illustrates a view from above of the apparatus of figure 1;
figures 16-18 illustrate three sections along planes XVI-XVI, XVII-XVII and XVIII-XVIII of the apparatus of figure 15; and
figure 19 illustrates a detail of a clamping device used in the apparatus of figure 1.

With reference to the figures, 1 denotes in its entirety a clamping apparatus, particularly suitable for operating centres, in particular CN horizontal operating centres.

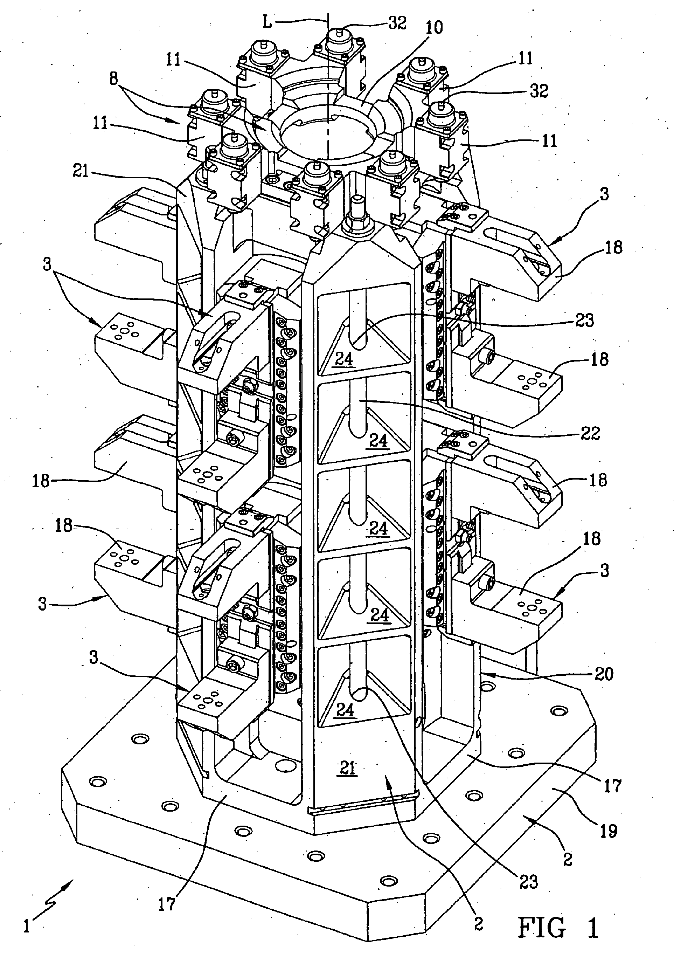

As can be seen in figure 1, the clamping apparatus 1 comprises a support frame 2 made of a metal material and, for example, made of aluminium, fashioned by working of a full block.

The support frame 2 can be made in a single block or, as in the illustrated embodiment, can be constituted by several elements that are rigidly reciprocally constrained.

Still with reference to figure 1, a base plate 19 is present, to which a turret 20 having a prismatic structure is constrained, exhibiting a plurality of lateral surfaces 17 joined to one another by inclined connecting surfaces 21.

In particular, the illustrated embodiment exhibits four lateral surfaces 17 connected by four connecting surfaces 21.

The turret 20 is in particular constrained to the base plate 19 by use of four tie-rods 22 which, by means of nuts, lock the tower 20 to the base plate 19.

In particular the tie rods 22 are located at the four connecting surfaces 21 and cross the surfaces 21 via through-holes 23 afforded in fins 24 of the connecting surfaces 21.

The above-described structure is extremely rigid. Obviously the base plate 19 also exhibits appropriate constraint means of known type to the operating centre structure for the loading/unloading and work operations (for example pneumatic or even mechanical means such as screws or the like can be used).

Still with reference to figure 1, on each of the lateral surfaces 17 there is a pair of clamps 3, each of which exhibits respective jaws 18 which are nearingly and distancingly reciprocally mobile in order to define a work position of the clamp (neared jaws) in which the clamp retains a work-piece and a rest' position (distanced jaws) in which the work-piece can be loaded/unloaded to or from the apparatus.

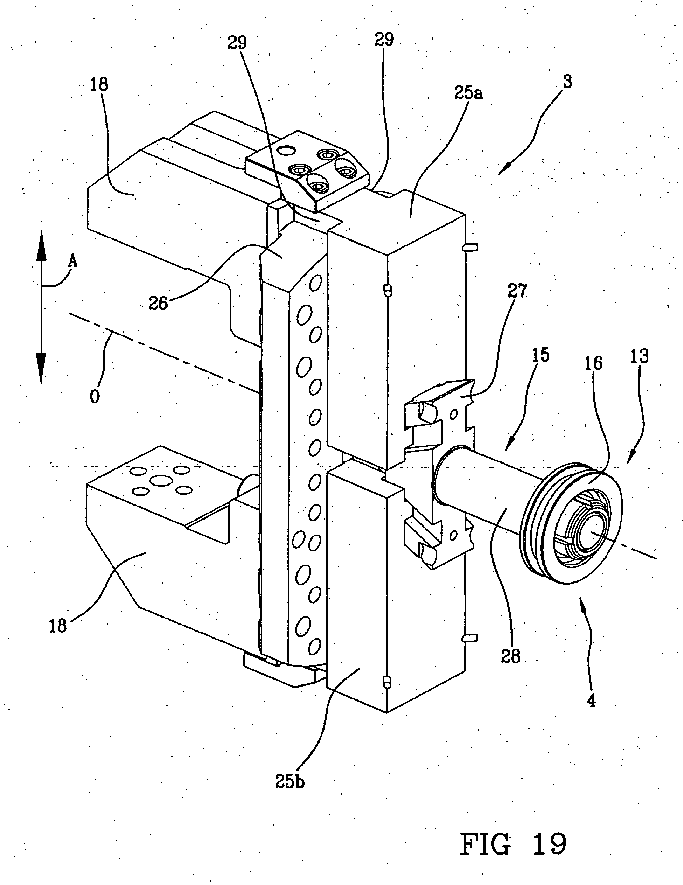

Note that the clamps 3 are of a standard type and the relative movement method is illustrated by way of example in figure 19.

Each of the two jaws 18 is in particular supported and rigidly constrained to an upper rigid structure and a lower rigid structure 25a, 25b.

The two rigid structures 25a, 25b form respective single-block mobile elements with a degree of liberty with respect to the support frame 2.

In particular these structures are slidable in a vertical direction in opposite senses (arrow A). Elements 26 are constrained to the support structure 2, to which elements 26 appropriate guides 29 of the upper and lower rigid structures 25a, 25b are coupled such as to enable movements in a vertical axis thereof.

A dove-tail coupling 27 is such that a corresponding displacement in a horizontal axis 0 of a shaft 28 which is part of a movement system 4 of the clamp 3 causes the opening/closing movement of the jaws 18 and therefore the change of configuration- of the clamp from the work position to the loading/unloading, or rest, position.

Looking again at figure 1, and still from the structural point of view, the clamping apparatus 1 of the present invention further comprises a distribution system 8 constituted by a body 10 and a predetermined number of distribution valves 11 constrained to the body 10.

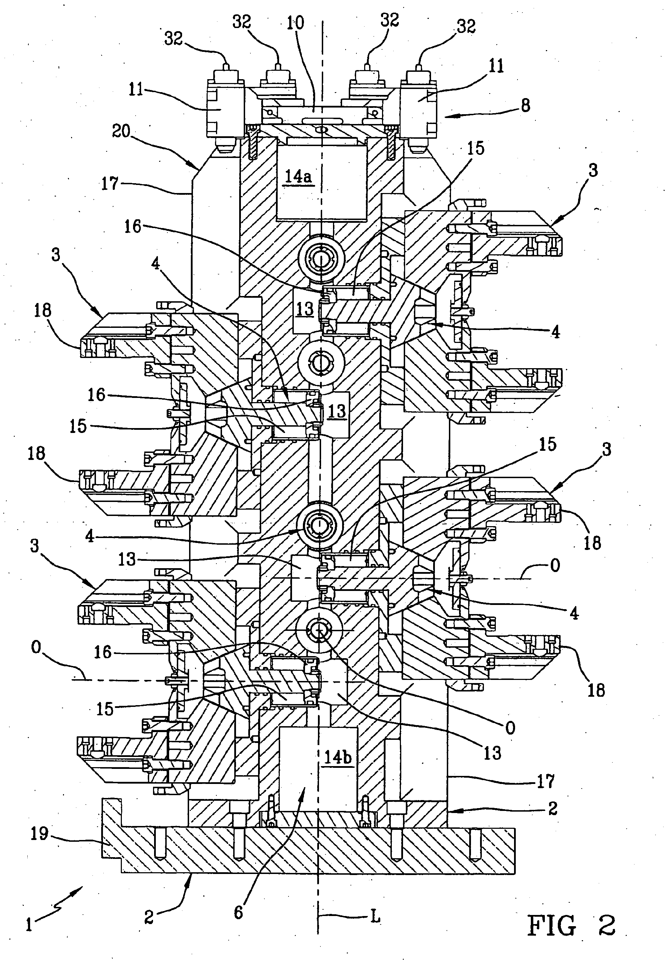

In particular the distribution system 8 is positioned at the top of the turret 20 and the aim and functioning thereof will be described herein below. Observing the section of figure 2 made along a vertical plane passing through the longitudinal axis of development L of the device, the various movement systems 4 of the clamps 3 can be seen.

In particular each clamp 3 is provided with a respective movement system 4 which can displace the jaws 18 from the work position to the rest position and vice versa.

In particular the movement system 4 comprises the dove-tail coupling 27 which can transform a movement about a horizontal axis of the shaft 28 into a vertical nearing/distancing movement of the jaws.

The movement of the shaft 28 is obtained by defining, for each movement system 4, two opposite chambers with a cursor 16 between them which prevents a passage of fluid between the two chambers. In particular each movement system 4 exhibits a first thrust chamber 15 for receiving a first pressurised fluid and a second thrust chamber 13 (open and common for all the movement systems of each clamp) which receives a second pressurised fluid.

The difference of pressures between the chamber. 13 and the chamber 15 generates a thrust force on the cursor 16 between the left end run position and the right end run position, leading to the horizontal movement of the shaft 28 and the corresponding opening/closing of the jaws 18.

In still other terms, by operating on the pressures of the two fluids in the chambers 13 and 15 it is possible to command the selective opening/closing of the clamps. The pressure difference between the two chambers will define the locking/opening force of the clamp.

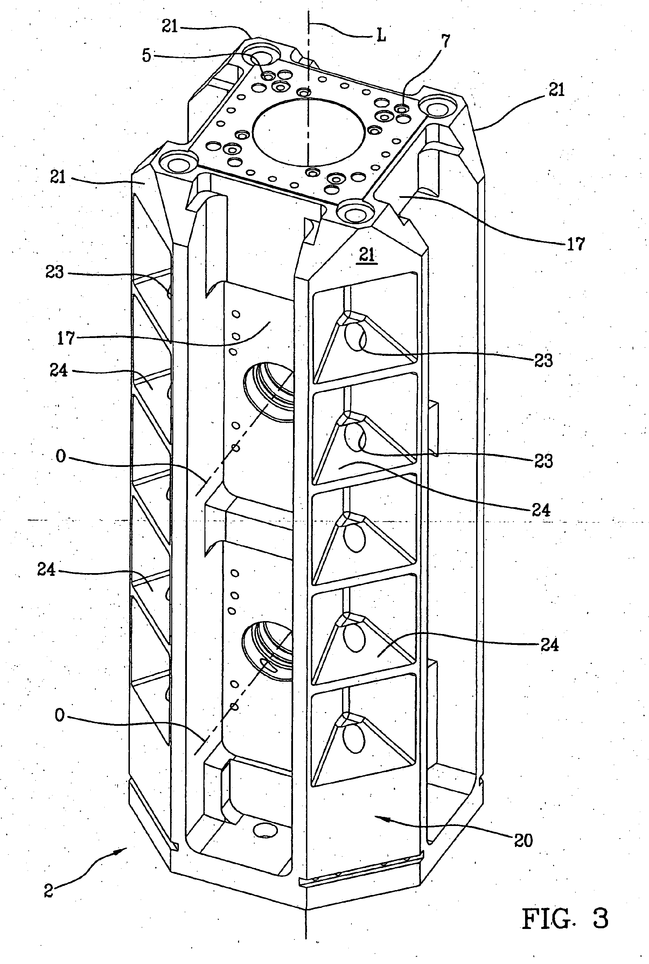

Figure 3 exclusively illustrates the turret 20 which is part of the support frame 2 of the clamp apparatus.

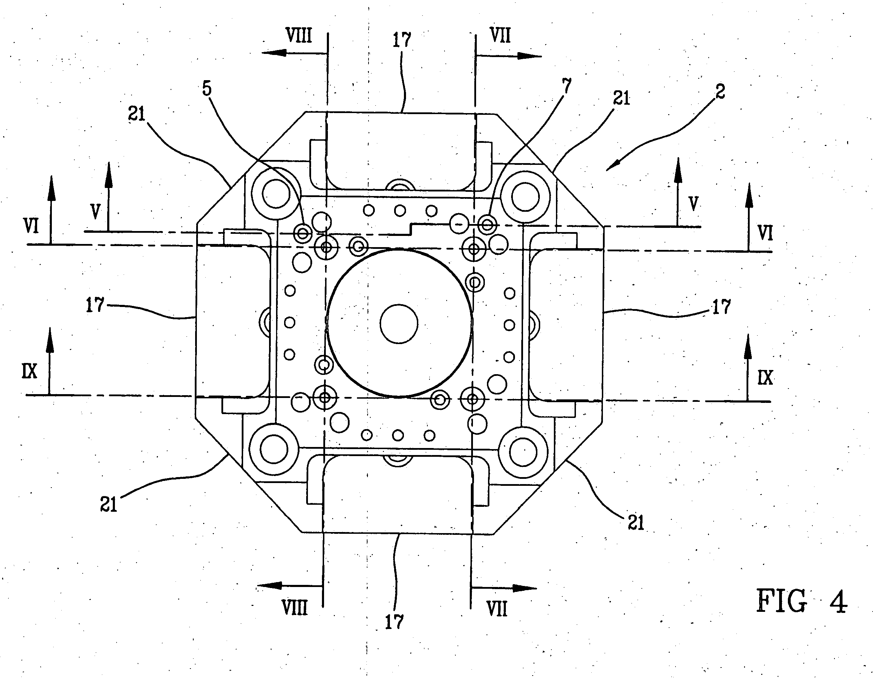

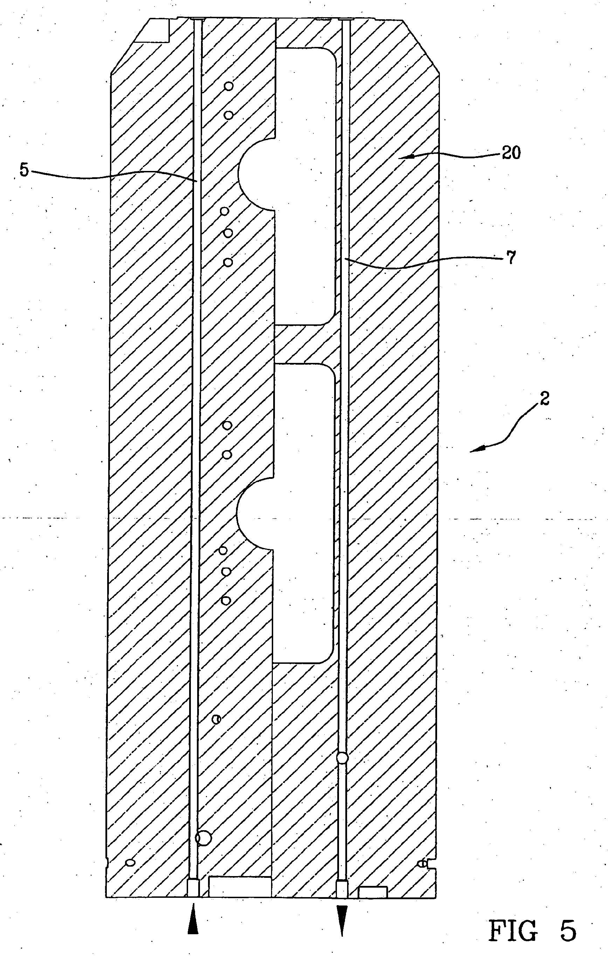

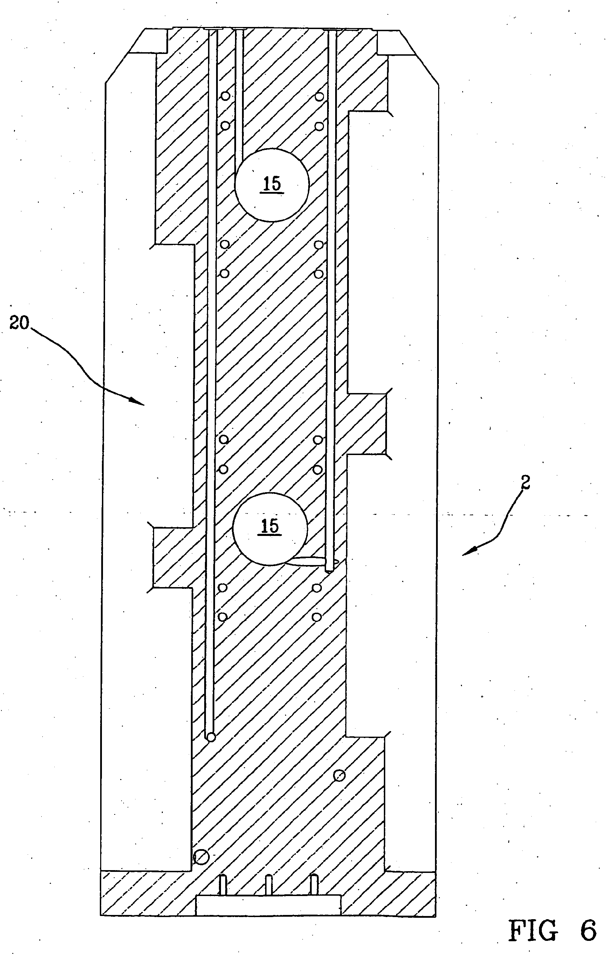

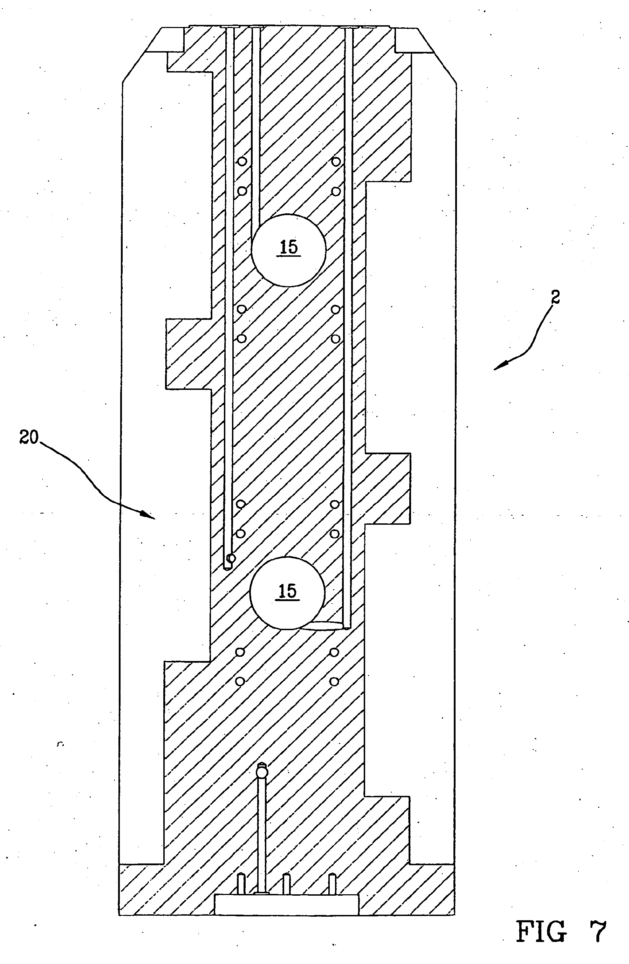

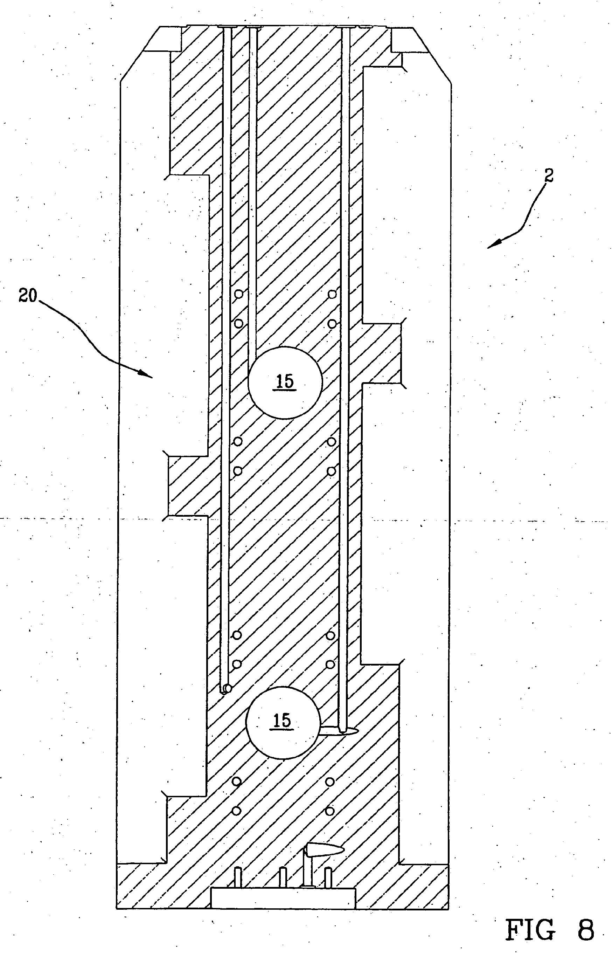

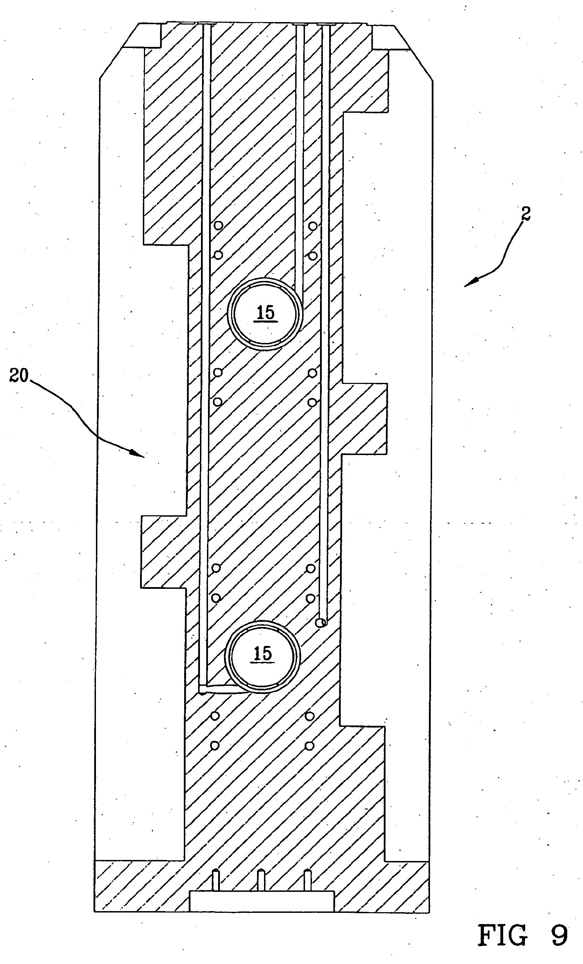

Figure 4 illustrates the turret 20 of figure 3 in a view from above in order to define section planes as in figures 5 to 9.

Looking first at figure 5, which represents the section along plane V-V of figure 4, there are two channels passing from the base of the turret 20 up to the summit thereof.

The first of the channels 5 defines a first pressure line for selectively supplying, with a first pressurised fluid, each above-described movement system 4, bringing the respective clamp 3 respectively from the rest position to the work position or vice versa according to the chamber into which the pressurised fluid is sent and according to the type of dovetail coupling used.

In particular, though not exclusively, the first pressurised fluid will be oil.

In other words, the channel 5 is connected via the' base plate 19 to a pressurised oil delivery line of the operating centre.

In particular, the pressurised oil crosses the delivery line 5 from the bottom towards the top and is then distributed via the above-described distribution system 8 to the various movement systems 4 of the clamps 3, as will be more fully described herein below.

The section of figure 5 also illustrates the presence of a further through-channel 7 crossing the whole turret 20.

The channel defines a discharge line for discharge and therefore a selective pressure drop of the first fluid (oil) from the movement system 4 of a respective clamp and enables a corresponding pressure drop internally of the chamber of the movement system and therefore an inverse displacement from the work position to the rest position or vice versa.

In other words, the discharge line 7 enables the fluid (oil) to cross the channel 7 from the top towards the bottom, terminating in a discharge channel of the oil from the operating centre.

Looking again at the section of figure 2, a further line 6 defines a fluid line that is independent with respect to the previously-cited one, which can command each movement system 4 in order to enable displacement thereof from the work position to the rest position or vice versa.

In particular, the second line 6 is predisposed to receive pressurised air and to vary the pressure of one of the two chambers of the movement system 4 of each clamp 3.

In very general terms, one of the movement chambers of each clamping system is affected by the pressure of the first fluid (oil), while the further chamber of the movement system 4 of the' clamp 3 is affected by the pressure of the second fluid (air).

The pressure difference between the first and the second fluids will determine the movement direction of the cursor 16 which will define the open or work position of the clamp 3.

As illustrated in all of the figures, the first thrust chamber 15 is preferentially destined to receive the first pressurised fluid (oil) while the further chamber 13 is destined to receive the second pressurised fluid (air).

In this way, and since the oil pressure is generally superior to the pressure of the air, when the chamber 15 is pressurised with the oil, the cursor will be displaced towards the inside of the turret 20 and the jaws 18 of the clamp 3 will lock (figure 2).

When the oil is discharged from the first pressurised chamber 15, the air pressure in the chamber 13 will be such as to move the cursor into the opposite position (i.e. in a horizontal direction towards the outside of the clamping apparatus), causing an opening of the respective clamp 3.

In the specific embodiment of the apparatus described, in general the pressures of the oil will be about 50 bar, while the pressures of the air will be about 7-11 bar.

As can be seen in figure 2, the second line 6 comprises a plurality of chambers 13 communicating with one another, each housing part of a movement system 4 of the clamps 3.

In other words, the second line 6 is defined by a central space afforded in the turret 20 which interacts contemporaneously with each of the movement systems 4 of the clamps 3.

The geometry of the second line is such that at least a chamber 14a, 14b is present, for example and upper and/or a lower chamber, in order to enable accumulation of air and prevent delay in movement of the clamp.

The upper chamber 14a and the lower chamber 14b are involved with no movement system of the clamps, and have the aim of lightening the structure.

A chamber 13 is present for each movement system 4 such that the generating of a pressure internally of the chamber leads to a corresponding thrust on the cursor 16 in a horizontal direction in an outwardly-directed sense of the clamping apparatus.

The second line 6 is set in fluid communication with an air pressure delivery destined to maintain the line (defined by the cavity constituted by the plurality of chambers 13 and the supper and lower accumulation chambers, i.e. by a closed cavity) under constant pressure.

The above relates at least to the loading/unloading station of the objects to be worked.

As far as the work station is concerned, the auxiliary delivery is generally disconnected from the apparatus and the second line 6 is at atmospheric pressure.

The above means that at least in the loading/unloading station of the objects to be worked on, in the absence of pressure in the oil-dynamic circuit, the clamps 3 tend to be bought into the rest position, i.e. with the jaws 18 open due to the pressure of the air in the chambers 13.

The above is true also in a case in which for any reason the pressure in the oil-dynamic line drops. At this point it is noteworthy that differently from the second pressurised line 6, the first pressurised line 5 of the oil commands each single clamp 3 independently, thanks to the distribution system 8.

In this way, the single clamps can be maintained in the working and/or rest position, independently of one another.

The above is extremely advantageous in a loading situation or where it is in general useful to have a single clamp 3 in rest condition in order for it to be able to be loaded, for example by a robot arm, while all the other clamps are in the work position, retaining objects already loaded to be worked on.

A description and illustration will now follow of the system enabling distribution of a single oil delivery such that each clamp 3 is commandable independently.

The distribution system 8 is in particular constituted by a body 10 comprising internally thereof a plurality of branching channels destined to enable system functioning as described herein above and by a plurality of distribution valves 11 destined to enable opening/closing command of the clamps 3.

The body 10 of the distribution system 8 is illustrated in figures from 10 to 14.

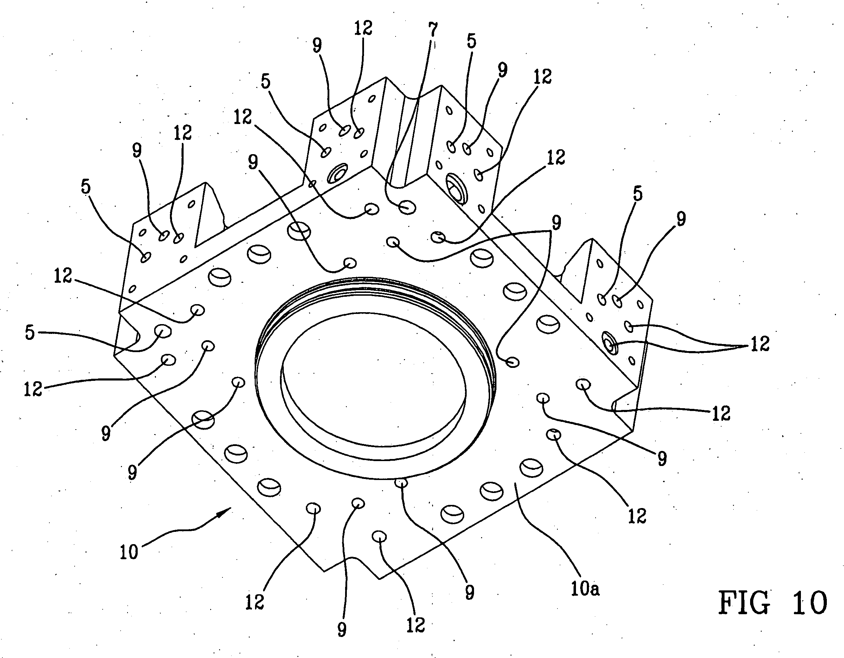

As can be understood by comparing figure 10 to figures 1 and 2, at the side of each corner of the body 10 there is a relative pair of command valves of a clamp (eight valves 11 destined to command eight clams 3).

The pressure line 5 is at the lower base 10a. The illustrated channel receives pressurised oil coming from the base of the turret 20 and takes it to each of the valves.

Note how at each corner of the body 10 there is a hole for setting the pressure line 5 in communication with the inlet of the valve.

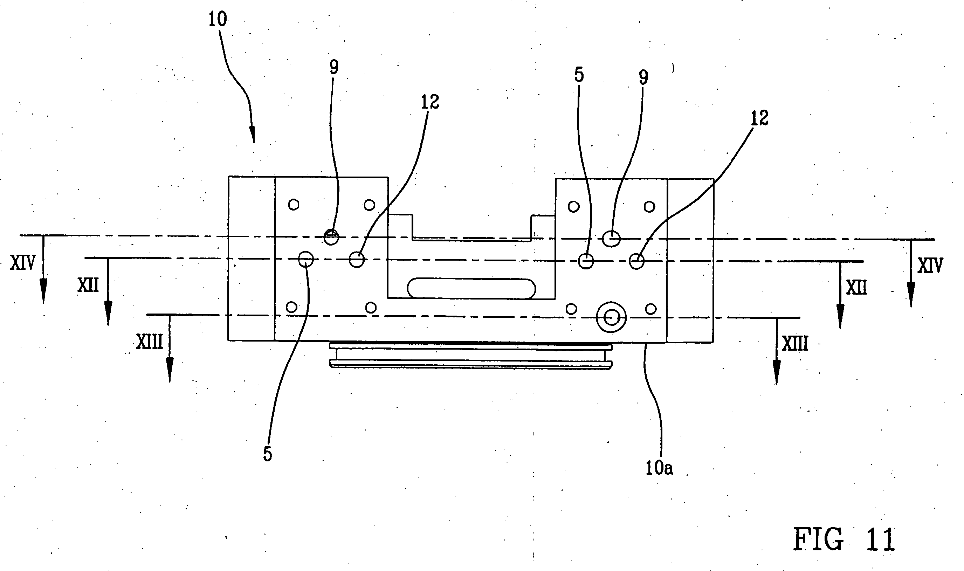

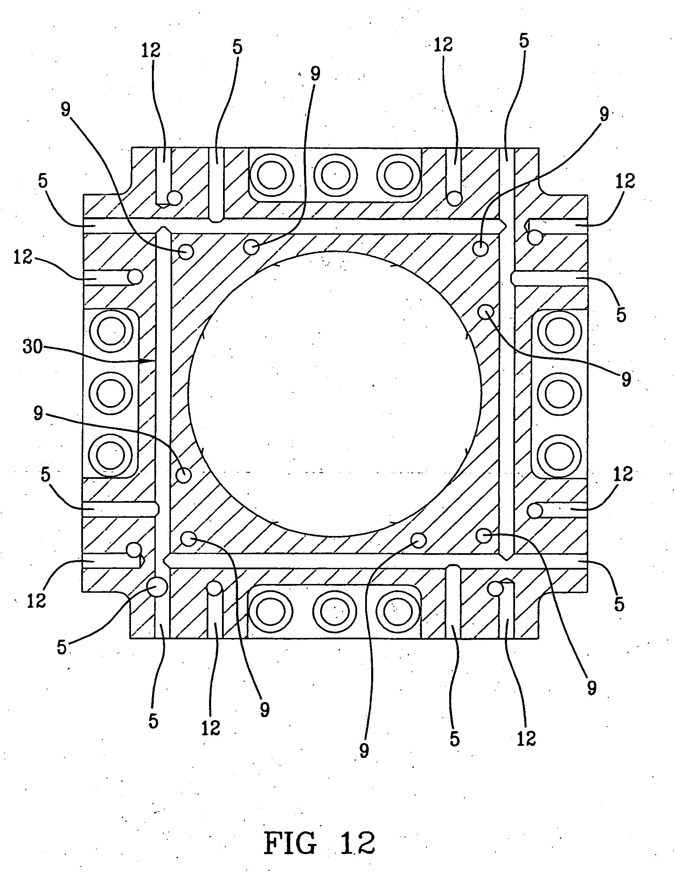

A section along plane XII-XII of figure 11 (figure 12) shows how internally of the body 10 a distributing ring 30 is afforded which can receive the pressurised oil coming from the inlet of the channel 5 located on the lower surface 10a of the body 10 and take the oil, at an intermediate plane, to each of the single valves 11, as illustrated.

In particular, the channel 5 exhibits a vertical portion (the section of which is visible in figure 12) at a lower left corner in fluid communication with the ring 30 having a square shape. The ring 30 exhibits the eight outlets at the lateral wall of the body 10 which constitute in turn inlets for each of the valves 11.

Looking again at figure 10, it can be seen that at each valve, apart from the above-mentioned inlet of the pressurised line 5, there are also accesses to the discharge line 7, as well as the independent channel system 9, which take the pressurised oil and discharge it from and to the clamps 3.

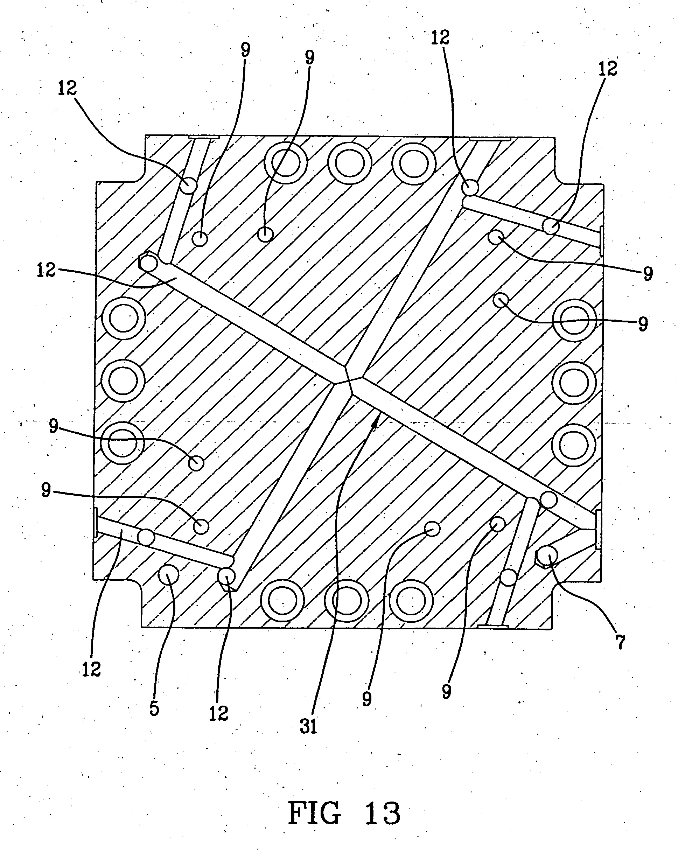

The section along plane XIII-XIII of figure 11 is shown in figure 13 and highlights the discharge manifold 31 which receives oil via the valves 11 when the said valves 11 are in the discharge position.

In particular, there are eight independent vertical channels 12, each destined to flow into the manifold 31 which in turn connects each of the discharges with the discharge line 7 illustrated in the bottom right corner of figure 13.

Looking again at figure 10, the channel 7 of figure 13 proceeds in a vertical direction up to the lower base 10a of the body 10 and is placed in fluid communication with the vertical channel crossing the turret 20 up to the discharge line of the operating unit.

Looking now at the independent channels 9, it can be seen that they are single channels which from an outlet of the valve 11 can selectively bring the pressurised oil to the first thrust chamber 15 of the movement system 4.

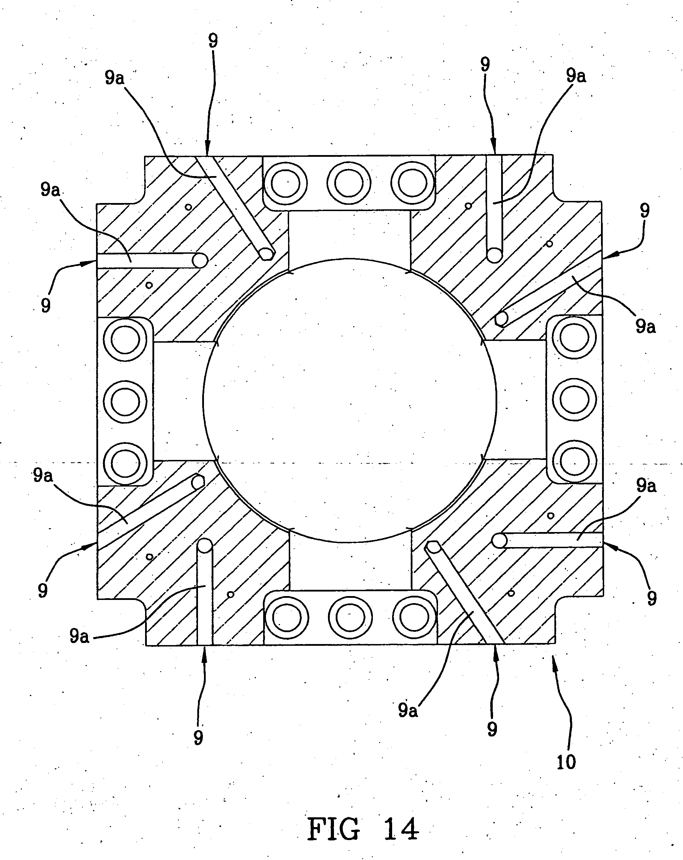

The channel 9 exhibits an inlet at each of the valves 11, defining a first substantially horizontal tract 9a towards the inside of the body 10, clearly illustrated in the section of figure 14 from which a second vertical tract 9b departs and extends into the turret 20 up to reaching the respective first thrust chamber 15.

Looking at figure 4, which illustrates the turret 20, and in particular the sections along planes VI-VI, VII-VII, VIII-VIII and IX-IX, the continuations of the second vertical tracts 9b are represented, which depart from the upper surface of the turret 20 (which in constraint conditions is associated to the lower base 10a of the body 10) and each reach a respective chamber 15 to bring the oil under pressure when the clamps 3 are to be closed.

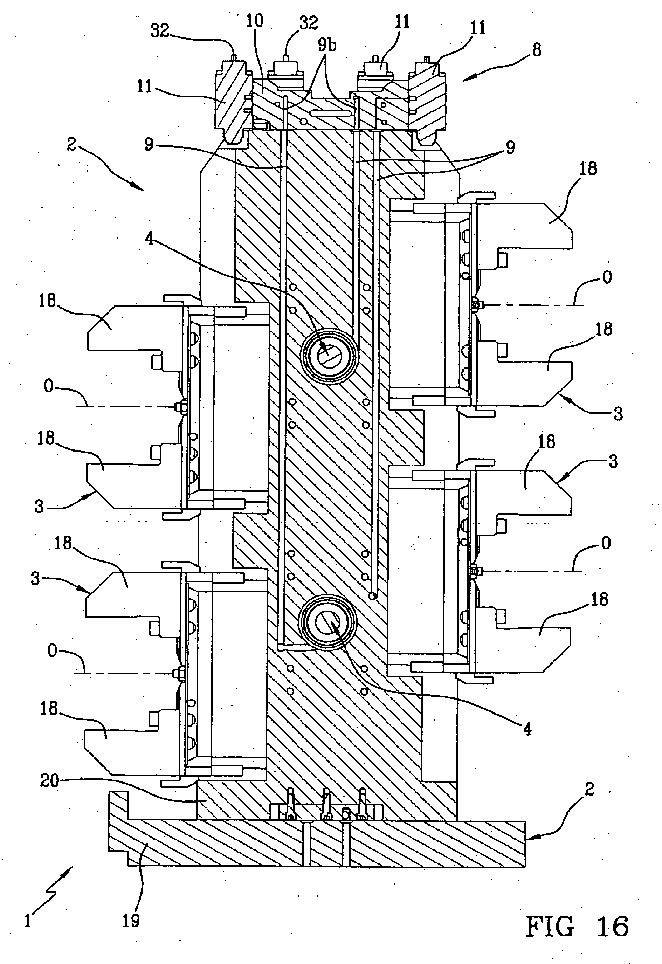

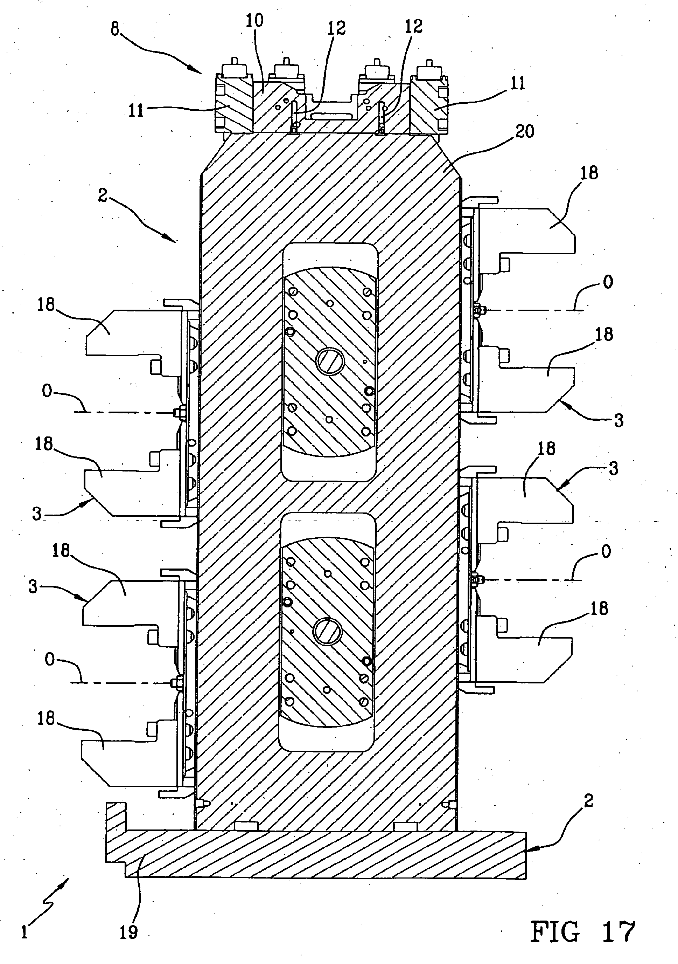

Figures 16-20 illustrate vertical sections according in staggered planes of the whole apparatus.

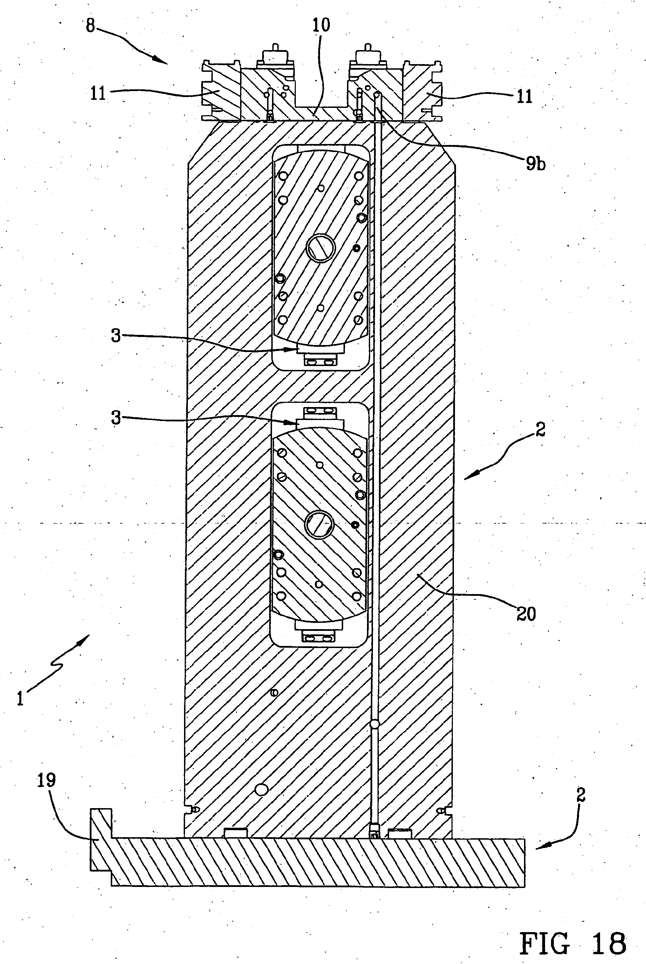

Figure 18 shows how a first vertical tract 9b which is part of the independent channel 9 exhibited by the body 10 proceeds internally of the turret 20 up to a position close to the base where a horizontal branch takes the pressurised oil to a first thrust chamber 15 of a movement system of a single clamp 3.

Figure'17 shows two vertical positions of the further channel which is part of the discharge group 12.

In particular, the parts 12 put the discharge of each of the valves 11 in fluid communication. (in particular each of the horizontal tracts illustrated in the section of figure 12 with the discharge manifold 31 illustrated in figure 13).

Figure 16 illustrates, in cross-section, two further independent channels 9 which are set in communication with the vertical tracts of channel internally of the turret 20 up to reaching the movement systems 4 of the various clamps 3.

The valves 11, associated to the apparatus are preferably mono-stable mechanical valves in a precise functioning condition of the apparatus.

As can be understood, each of the valves is set to place, independently of the others, a determined clamp 3 selectively under pressure, causing the clamps to close.

To achieve this, the valve sets the first pressurised line 5 in fluid communication with a respective independent channel 9 and thus enables the pressurised oil to reach the first thrust chamber 15 and to close the jaws 18.

In discharge conditions, the valve is moved such as to set the independent channels 9 in communication with a line of the further channels 12, in turn in communication with the discharge manifold and with the discharge line 7.

In this way the pressurised oil which was inside the chambers 15 flows, discharging the pressure through the discharge line 7, and the air contained in the chamber 13 overcomes the force exerted on the cursor 16 by the oil, wringing the clamps into the open condition.

The functioning of the clamping apparatus is as follows.

Once the oil delivery line has been connected, the discharge line and the pressurised air line, the pressurised oil line (for example presssurised to about 50 bar) is brought, through the first pressurised line 5 and the distributing line 30 present in the body 10, to the inlet of each valve 11.

The valves 11 are in a mono-stable open position and set the delivery line 5 in immediate fluid communication with each of the respective independent channels 9, setting the first thrust chamber 15 in pressure and closing each of the clamps.

The air pressure (7-11 bar) contained in the second line 6, and in particular in each of the chambers 13, is lower than the pressure of the oil and therefore the cursor 16 of each of the clamps 3 is retracted towards the inside of the turret 20, as illustrated in figure 2.

At the moment when a clamp 3 is to be opened, in a loading/unloading situation of the work-piece, a mechanical actuator acts at an activation 32 of the respective valve 11.

The mechanical activation 32 takes the valve from the condition of fluid connection between the first pressure line 5 and the independent channels 9 to a condition of connection of the first independent channels 9 with the discharge line 7.

This operation enables the pressure of the oil contained in the first thrust chambers 15 to drop and rapidly to be overcome by the pressure of the air present in the respective cambers 13. In this way the clamp 3 by which the valve 11 is headed displaces from the working condition, with the jaws 18 locked, to the rest position in order to enable discharge/loading of the further work-piece.

This operation can be repeated with reference to each of the further valves 11, and thus with respect to each of the further clamps 3, enabling an independent and selective opening/closing of the clamps 3.

It is obvious that two or more valves can be acted on at a same time, enabling the respective clamps to be simultaneously opened.

Once the loading/unloading of the work-piece has been complete, the mechanical actuator stops exerting pressure on the activation of the valve 11 and the salve 11 returns into the monostable condition, newly spending pressure to the first thrust chambers 15 and thus closing the clamp.

Once the loading/unloading operations have been completed the clamping apparatus can be sent to working chamber of the operating centre.

As generally the operating centre will be screened and protect and there is no need for any loading/unloading operation, the pressure of the air in the chambers 13 can be removed, enabling better locking of each of the clamps. 3, as the pressure difference acting on the cursor 16 will be increased. In a further embodiment of the clamping apparatus 1, particularly for operating centres, for example horizontal, there is a support frame 2 together with at least a first and a second clamp 3 associated to the support frame 2, each of which is mobile between a work position in which it retains the object and at least a rest position in which it enables loading/unloading of the object.

There is also a movement system 4 for each clamp 3 which enables movements of the corresponding clamp 3 between the rest and work positions.

The clamps are mobile between the work and rest positions independently of one another.

Note that the above-described characteristics of the alternative clamping apparatus are totally identical to those previously described.

The alternative apparatus comprises at least a first pressurised line 5 for selectively supplying, with a same pressurised fluid, each movement system 4, and for bringing the respective clamp 3 respective from the rest position to the work position or vice versa, and at least a second line 6 for commanding, with the same first pressurised fluid, at a lower pressure than the pressure in the first pressurised line 5, each movement system 4, and for bringing the respective clamp from the work position to the rest position and vice versa.

In other words, instead of using two distinct fluids as in the embodiment illustrated in the accompanying figures of the drawings, the same fluid is used with pressure reducers which enable generation and maintenance of the second line 6 under pressure, but at a lower pressure than the pressure which can be generated in the first line 5, and in particular at each of the clamps.

Through more complex from the point of view of realisation, the alternative solution illustrated above enables a single fluid to be used for operation of the clamps from the rest position and vice versa, and independently of one another

The invention provides important advantages.

The apparatus of the invention mounts, on each side of the turret, two identical clamps (run 40 mm, closure 150 mm) to those which are usually used for the construction of turntables typical of most transfer machines.

The apparatus can be simply and rapidly fixed on the work plane of any machine tool.

Merely by way of example, the clamping apparatus can be used in a horizontal operating centre known as MORI SEIKI NH5000DCG. With the aim of rendering the opening of each single clamp totally automatic, the mechanical command of the upper valves is activated by means of retractable pneumatic actuators (for example two in number).

The clamping apparatus enables automatic command of the single clamp: the use of external automatic actuators on mechanically-commanded valves enables each single clamp to be commander using only one hydraulic line.

The use of compressed air which contrasts the locking pressure of the oil considerably simplifies the structure of the internal holes in the turret of the distributor body.

Command of each single clamp is important, as it enables the machine tool to be served by a non-manned automatic load system which can also load very unstable pieces, which, if all the clamps moved at the same time would not be loadable, unless complex support elements dedicated to a single article were used.

In other terms, this enables transposing clamping technologies typical of transfer machines onto CNC machine tools, while maintaining the greater productive flexibility.

Further, the horizontal distance between the clamp centres is calculated such as to best exploit the work run of the horizontal axis.

If an interpolation is to be made on the external surfaces of the piece with a mill having diameter D, the best distance between the centres of the clamps is calculated as the (axis-chuck diameter run-D) X/3.

This maximises the width of the piece loaded such that there is no interference between the parts in movement and the fixed parts.

Further, and as has been mentioned, standard clamps can be used which are taken from transfer machines with the aim at reducing realisation costs and maintaining full, compatibility with the exiting, apparatus also thanks to the idea of arranging the clamps in a double-spiral geometry.

This enables full exploitation of the vertical axis run (in the specific case 730 mm), while also maintaining the optimal use of the run of the horizontal axis (in the specific case, also 730 mm). This geometry does not at all complicate the programming of each piece; in fact it is within the norm that each clamp, due to the inevitable working errors of the piece-clamp coupling, has to be characterised with its own heights with respect to the reference axes. Although the differences between the heights are not in the order of tenths of millimetres, but tens of millimetres, the problem is substantially the same and is dealt with in the same manner.

In other terms there is once more a combination of the flexibility, removal power and optimum structural qualities, as well as the fine-finishing of working of the horizontal work centres with the velocity of the transfer machines.

The invention aims to exploit the considerable potentialities of four-axis CNCs, trying however to improve performance.

With eight pieces in the work area, dead times are distributed (tool change, work plane change, rotation of the turntable) on each of the pieces, and the centre's production is at more than acceptable levels for batches of quite large sizes, which with transfer machines, due to tool-changing times or complexity of realisation, would not be economical in terms of production.

It is worthy of note that, given the possibility of extracting the work plane from the CNC, several turrets can be used, for example two working and two being prepared.

This enables reducing to a minimum the times required for passing from a production to a next production.

## Claims

1. A clamping device, especially for operating centres, comprising:
a support frame (2);
at least a first and a second clamp (3) associated to the support frame (2), each of the clamps (3) being mobile between at least a work position in which it retains an object and at least a rest position in which it enables loading/unloading of the object;
a movement system (4) for each clamp (3) destined to enable displacements of a corresponding clamp (3) between a rest position and a working position, the clamps (3) being mobile between the work position and the rest position independently of each other,
**characterised in that** it comprises at least a first pressurised line (5) for selectively supplying a first same pressurised fluid to each movement system (4) and for bringing the respective clamp (3) respectively from the rest position to the work position or vice versa and at least a second line (6) for commanding, with a second same pressurised fluid, each movement system (4) and for bringing the respective clamp (3) from the work position to the rest position or vice versa.

2. The clamping device of the preceding claim, **characterised in that** it further comprises a discharge line (7) for enabling discharge and selective pressure drop of the first fluid from the movement system (4) of a respective clamp (3) and for enabling the second pressurised fluid to bring the clamp from the work position to the rest position or vice versa.

3. The clamping device of any one of the preceding claims, **characterised in that** it further comprises a distribution system (8) destined to receive the first pressurised fluid in inlet, to selectively distribute the first pressurised fluid with independent channels (9) to each of the clamps (3) and to enable, in outlet and selectively, the discharge and the pressure drop of the fluid from each of the clamps (3).

4. The' clamping device of the preceding claim, **characterised in that** the distribution system (8) comprises at least a body (10) destined to receive in inlet the pressurised line (5) and a predetermined number of distribution valves (11), preferably one for each clamp (3), the body (10) being channelled in such a way as to bring the first pressurised fluid to each of the distribution channels (11), the body (10) exhibiting the independent channels (9), in outlet from the distribution valve (11), each in fluid communication with a respective movement system (4) of a clamp (3).

5. The clamping device of the preceding claim, **characterised in that** the body (10) exhibits a further group of independent channels (12) in selective fluid communication and in outlet from the distribution valves (11), the further group of independent channels (12) converging into the discharge line (7) in order to enable unloading and selective pressure drop of the first fluid from the movement system (4) of a respective clamp (3).

6. The clamping device of the preceding claim, **characterised in that** each distribution valve (11) is configurable, independently of the others, for enabling/preventing fluid communication between the
pressurised line (5) and the respective independent channel (9) of a movement system (4) of a clamp (3) and for enabling/preventing fluid communication between the independent channel (9) and the discharge line (7), via the respective independent channel (11) of the further, group of independent channels (11).

7. The clamping device of any one of the preceding claims, **characterised in that** the second line (6) is in fluid communication contemporaneously with each of the movement systems (4) of the clamps (3), the second line (6) preferably comprising a plurality of chambers (13) communicating with one another and housing a part of each movement system (4) of the clamps (3) the second line (6) still more preferably comprising at least a chamber (14a, 14b), for example either upper and/or lowers for enabling an accumulation of the second fluid and preventing
delays in movement of the clamp.

8. The clamping device of any one of the preceding claims, **characterised in that** the movement system (4) of a clamp (3) comprises at least a first thrust chamber (15) selectively suppliable with the first pressurised fluid and a chamber (13) suppliable with the second pressurised fluid, the two chambers (13, 15) being isolated from one another, the movement system further comprising a cursor (16) which is immobile towards one or another of the chambers (13, 15) according to a pressure difference in the two chambers, the movement of the cursor (16) towards one or the other chamber (13, 15) moving the clamp (3) and defining the work/rest positions thereof.

9. The clamping device of any one of the preceding claims, **characterised in that** the support frame (2) has a prevalent development along a vertical longitudinal axis (L) and exhibits a prismatic geometry, the clamps (3) being arranged on respective lateral surfaces (17) of the support frame and defining closing directions of the jaws (18) according to a preferred vertical direction, in particular the support frame (2) receiving at least two clamps (3) arranged one above the other along the vertical longitudinal axis (L), at a same lateral surface (17), the horizontal axis (O) defining the central closure axis of each clamp (3) preferably being staggered in a vertical direction with respect to the horizontal axes (O) of the other clamps (3).

10. The clamping device of any one of the preceding claims, **characterised in that** the first fluid is oil and the second fluid is air, the oil pressure in the first pressurised line (5) being greater than the air pressure in the second line (6), each distribution valve (11) being mono-stabile and defining a rest condition thereof in which it sends the pressurised fluid to the movement system (4) of the respective clamp (3), positioning the clamp (3) in the work position.

## Patentansprüche

1. Klemmvorrichtung, insbesondere für Bearbeitungszentren, umfassend:
einen Trägerrahmen (2);
mindestens eine erste und eine zweite Klemme (3), verbunden mit dem Trägerrahmen (2), wobei jede der Klemmen (3) zwischen mindestens einer Arbeitsposition, in der sie ein Objekt hält, und mindestens einer Ruheposition, in der sie ein Laden / Entladen des Objektes ermöglicht, beweglich ist;
ein Bewegungssystem (4) für jede Klemme (3), dazu bestimmt, Verlagerungen einer entsprechenden Klemme (3) zwischen einer Ruheposition und einer Arbeitsposition zu ermöglichen, wobei die Klemmen (3) zwischen der Arbeitsposition und der Ruheposition unabhängig voneinander beweglich sind,
**dadurch gekennzeichnet, dass** es mindestens eine erste Druckleitung (5) zum wahlweisen Speisen eines ersten gleichermaßen unter Druck stehenden Fluids an jedes Bewegungssystem (4) und zum Bringen der entsprechenden Klemme (3) jeweils von der Ruheposition in die Arbeitsposition oder umgekehrt und
mindestens eine zweite Leitung (6) zum Steuern jedes Bewegungssystems (4) mit einem zweiten gleichsam unter Druck stehenden Fluid und zum Bringen der entsprechenden Klemme (3) von der Arbeitsposition in die Ruheposition oder umgekehrt.

2. Klemmvorrichtung nach dem vorhergehenden Anspruch, **dadurch gekennzeichnet, dass** sie weiter eine Ablassleitung (7) umfasst, um Ablass und wahlweisen Druckabfall des ersten Fluids vom Bewegungssystem (4) einer entsprechenden Klemme (3) zu ermöglichen, und zu ermöglichen, dass das zweite unter Druck stehende Fluid die Klemme aus der Arbeitsposition in die Ruheposition oder umgekehrt bringt.

3. Klemmvorrichtung nach einem der vorhergehenden Ansprüche, **dadurch gekennzeichnet, dass** sie weiter ein Verteilungssystem (8) umfasst, dazu bestimmt, das erste unter Druck stehende Fluid in einem Einlass zu empfangen, um das erste unter Druck stehende Fluid wahlweise mit unabhängigen Kanälen (9) an jede der Klemmen (3) zu verteilen, und, in einem Auslass und wahlweise, den Ablass und den Druckabfall des Fluids von jeder der Klemmen (3) zu ermöglichen.

4. Klemmvorrichtung nach dem vorhergehenden Anspruch, **dadurch gekennzeichnet, dass** das Verteilungssystem (8) mindestens einen Körper (10), dazu bestimmt, im Einlass die Druckleitung (5) zu empfangen, und eine vorbestimmte Anzahl von Verteilungsventilen (11), vorzugsweise eines für jede Klemme (3), umfasst, wobei der Körper (10) so mit Kanälen versehen ist, dass das erste unter Druck stehende Fluid an jeden der Verteilungskanäle (11) gebracht wird, wobei der Körper (10) die unabhängigen Kanäle (9) aufweist, im Auslass des Verteilungsventils (11), jeder in Fluidverbindung mit einem entsprechenden Bewegungssystem (4) einer Klemme (3).

5. Klemmvorrichtung nach dem vorhergehenden Anspruch, **gekennzeichnet dadurch, dass** der Körper (10) eine weitere Gruppe von unabhängigen Kanälen (12), in wahlweiser Fluidverbindung und im Auslass der Verteilungsventile (11), aufweist, wobei die weitere Gruppe von unabhängigen Kanälen (12) in die Ablassleitung (7) konvergiert, um das Entladen und den wahlweisen Druckabfall des ersten Fluids aus dem Bewegungssystem (4) einer entsprechenden Klemme (3) zu ermöglichen.

6. Klemmvorrichtung nach dem vorhergehenden Anspruch, **gekennzeichnet dadurch, dass** jedes Verteilungsventil (11) unabhängig von den anderen konfigurierbar ist, Fluidverbindung zwischen der Druckleitung (5) und dem entsprechenden unabhängigen Kanal (9) eines Bewegungssystems (4) einer Klemme (3) zu ermöglichen / zu verhindern, und um Fluidverbindung zwischen dem unabhängigen Kanal (9) und der Ablassleitung (7) durch den entsprechenden unabhängigen Kanal (11) der weiteren Gruppe von weiteren unabhängigen Kanälen (11) zu ermöglichen / zu verhindern.

7. Klemmvorrichtung nach einem der vorhergehenden Ansprüche, **gekennzeichnet dadurch, dass** die zweite Leitung (6) gleichzeitig in Fluidverbindung mit jedem der Bewegungssysteme (4) der Klemmen (3) ist, wobei die zweite Leitung (6) vorzugsweise eine Mehrzahl von Kammern (13) umfasst, die miteinander kommunizieren und einen Teil dieses Bewegungssystems (4) der Klemmen (3) beherbergen, wobei die zweite Leitung (6) weiter vorzugsweise mindestens eine Kammer (14a, 14b) umfasst, beispielsweise entweder eine obere und / oder eine untere, um eine Ansammlung des zweiten Fluids zu ermöglichen und Verzögerungen in der Bewegung der Klemme zu verhindern.

8. Klemmvorrichtung nach einem der vorhergehenden Ansprüche, **gekennzeichnet dadurch, dass** das Bewegungssystem (4) einer Klemme (3) mindestens eine erste Schubkammer (15) umfasst, die wahlweise mit dem ersten unter Druck stehenden Fluid speisbar ist, und eine Kammer (13), die mit dem zweiten unter Druck stehenden Fluid speisbar ist, wobei die zwei Kammern (13, 15) voneinander isoliert sind, wobei das Bewegungssystem weiter einen Zeiger (16) umfasst, der in Richtung einer oder der andere der Kammern (13, 15) in Abhängigkeit einer Druckdifferenz in den beiden Kammern unbeweglich ist, wobei die Bewegung des Zeigers (16) in Richtung einer oder der anderen Kammer (13, 15) die Klemme (3) bewegt und die Arbeits-/Ruhepositionen derer definiert.

9. Klemmvorrichtung nach einem der vorhergehenden Ansprüche, **gekennzeichnet dadurch, dass** der Trägerrahmen (2) eine vorherrschende Entwicklung entlang einer vertikalen Längsachse (L) aufweist und eine Prismengeometrie besitzt, wobei die Klemmen (3) auf entsprechenden lateralen Oberflächen (17) des Trägerrahmens angeordnet sind und Schließrichtungen der Spannbacken (18) gemäß einer bevorzugten vertikalen Richtung definieren, insbesondere wobei der Trägerrahmen (2) mindestens zwei Klemmen (3) empfängt, die eine über der anderen entlang der vertikalen Längsachse (L) angeordnet sind, an der gleichen lateralen Oberfläche (17), wobei die horizontale Achse (O) die zentrale Schließachse jeder Klemme (3) definieren, vorzugsweise in einer vertikalen Richtung in Bezug auf die horizontalen Achsen (O) der anderen Klemmen (3) gestaffelt.

10. Klemmvorrichtung nach einem der vorhergehenden Ansprüche, **gekennzeichnet dadurch, dass** das erste Fluid Öl ist und das zweite Fluid Luft, wobei der Öldruck in der ersten Druckleitung (5) größer ist als der Luftdruck in der zweiten Leitung (6), wobei jedes Verteilungsventil (11) monostabil ist und einen Ruhezustand dessen definiert, in dem es das unter Druck stehende Fluid zum Bewegungssystem (4) der entsprechenden Klemme (3) schickt, die Klemme (3) in der Arbeitsposition positionierend.

## Revendications

1. Dispositif de serrage, spécialement pour des centres opérationnels, comprenant:
un cadre de support (2);
au moins un premier et un deuxième étau (3) associés au cadre de support (2), chacun des étaux (3) étant mobile entre au moins une position de fonctionnement, dans laquelle il retient un objet, et au moins une position de repos, dans laquelle il permet le chargement/déchargement de l'objet;
un système de mouvement (4) pour chaque étau (3) destiné à permettre des déplacements d'un étau correspondant (3) entre une position de repos et une position de fonctionnement, les étaux (3) étant mobiles entre la position de fonctionnement et la position de repos indépendamment l'un de l'autre,
**caractérisé en ce qu'**il comprend au moins une première ligne pressurisée (5) pour alimenter sélectivement un même premier fluide pressurisé à chaque système de mouvement (4) et pour déplacer l'étau respectif (3) respectivement de la position de repos à la position de fonctionnement ou vice versa, et au moins une deuxième ligne (6) pour commander, avec un même deuxième fluide pressurisé, chaque système de mouvement (4) et pour déplacer l'étau respectif (3) de la position de fonctionnement à la position de repos ou vice versa.

2. Dispositif de serrage selon la revendication précédente, **caractérisé en ce qu'**il comprend en outre une ligne de décharge (7) pour permettre de décharger et de baisser sélectivement la pression du premier fluide du système de mouvement (4) d'un étau respectif (3) et pour permettre au deuxième fluide pressurisé de déplacer l'étau de la position de fonctionnement à la position de repos ou vice versa.

3. Dispositif de serrage selon une quelconque des revendications précédentes, **caractérisé en ce qu'**il comprend en outre un système de distribution (8) destiné à recevoir le premier fluide pressurisé en entrée, à distribuer sélectivement le premier fluide pressurisé au moyen de canaux indépendants (9) à chacun des étaux (3), et à permettre, en sortie et sélectivement, de décharger et de baisser la pression du fluide de chacun des étaux (3).

4. Dispositif de serrage selon la revendication précédente, **caractérisé en ce que** le système de distribution (8) comprend au moins un corps (10) destiné à recevoir en entrée la ligne pressurisée (5) et un nombre prédéterminé de soupapes de distribution (11), de préférence une pour chaque étau (3), le corps (10) étant pourvu de canaux de manière à envoyer le premier fluide pressurisé à chacun des canaux de distribution (11), le corps (10) présentant les canaux indépendants (9), en sortie de la soupape de distribution (11), chacun en communication de fluide avec un système de mouvement respectif (4) d'un étau (3).

5. Dispositif de serrage selon la revendication précédente, **caractérisé en ce que** le corps (10) présente un groupe ultérieur de canaux indépendants (12) en communication sélective de fluide et en sortie des soupapes de distribution (11), le groupe ultérieur de canaux indépendants (12) convergeant dans la ligne de décharge (7) pour permettre de décharger et de baisser sélectivement la pression du premier fluide du système de mouvement (4) d'un étau respectif (3).

6. Dispositif de serrage selon la revendication précédente, **caractérisé en ce que** chaque soupape de distribution (11) est apte, indépendamment des autres, à permettre/empêcher une communication de fluide entre la ligne pressurisée (5) et le canal indépendant respectif (9) d'un système de mouvement (4) d'un étau (3), et à permettre/empêcher une communication de fluide entre le canal indépendant (9) et la ligne de décharge (7), via le canal indépendant respectif (11) du groupe ultérieur de canaux indépendants (12).

7. Dispositif de serrage selon une quelconque des revendications précédentes, **caractérisé en ce que** la deuxième ligne (6) est en communication de fluide simultanément avec chacun des systèmes de mouvement (4) des étaux (3), la deuxième ligne (6) comprenant de préférence une pluralité de chambres (13) communicant l'une avec l'autre et logeant une partie de chaque système de mouvement (4) des étaux (3), la deuxième ligne (6) de manière encore plus préférée comprenant au moins une chambre (14a, 14b), par exemple supérieure et/ou inférieure, pour permettre une accumulation du deuxième fluide et empêcher des retards dans le mouvement du étau.

8. Dispositif de serrage selon une quelconque des revendications précédentes, **caractérisé en ce que** le système de mouvement (4) d'un étau (3) comprend au moins une première chambre de poussée (15), qui peut être alimentée sélectivement avec le premier fluide pressurisé, et une chambre (13), qui peut être alimentée avec le deuxième fluide pressurisé, les deux chambres (13, 15) étant isolées l'une de l'autre, le système de mouvement comprenant en outre un curseur (16), qui est immobile en direction de l'une ou de l'autre chambre (13, 15) selon une différence de pression dans les deux chambres, le mouvement du curseur (16) en direction d'une chambre ou de l'autre (13, 15) mouvant l'étau (3) et définissant sa position de fonctionnement/de repos.

9. Dispositif de serrage selon une quelconque des revendications précédentes, **caractérisé en ce que** le cadre de support (2) a une extension prédominante le long d'un axe longitudinal vertical (L) et présente une géométrie prismatique, les étaux (3) étant disposés sur des surfaces latérales respectives (17) du cadre de support et définissant des directions de fermeture des mâchoires (18) suivant une direction verticale préférée, en particulier le cadre de support (2) recevant au moins deux étaux (3) disposés l'un au dessus de l'autre le long de l'axe longitudinal vertical (L), sur la même surface latérale (17), l'axe horizontal (O) définissant l'axe de fermeture central de chaque étau (3) étant de préférence décalé dans une direction verticale par rapport à l'axe horizontal (O) de l'autre étau (3).

10. Dispositif de serrage selon une quelconque des revendications précédentes, **caractérisé en ce que** le premier fluide est de l'huile et le deuxième fluide est de l'air, la pression de l'huile dans la première ligne pressurisée (5) étant plus élevée que la pression de l'air dans la deuxième ligne (6), chaque soupape de distribution (11) étant mono-stabile et définissant une condition de repos de celle-ci, dans laquelle elle envoie le fluide pressurisé au système de mouvement (4) du clamp respectif (3), en positionnant l'étau (3) dans la position de fonctionnement.
